# EUROPÄISCHE PATENTANMELDUNG

(11) **EP 3 300 455 A1**
(43) Veröffentlichungstag der Anmeldung: **28.03.2018**
(21) Anmeldenummer: 17191221.5
(22) Anmeldetag: 15.09.2017
(51) Int. Cl.: H05B 6/12

(54) **KOCHFELD UND VERFAHREN ZUR POSITIONIERUNG EINER HEIZEINRICHTUNG AN EINEM KOCHFELD**

(30) Priorität: 22.09.2016 DE 102016218269
(71) Anmelder: E.G.O. Elektro-Gerätebau GmbH, 75038 Oberderdingen (DE)
(72) Erfinder: Egenter, Christian, 75015 Bretten (DE); Frank, Marcus, 75056 Sulzfeld (DE)
(74) Vertreter: Patentanwälte Ruff, Wilhelm, Beier, Dauster & Partner mbB

(57) **Zusammenfassung**

Ein Kochfeld weist eine Kochfeldplatte mit einem Heizbereich, mehrere Heizeinrichtungen unter der Kochfeldplatte, die in dem Heizbereich bewegbar angeordnet sind, und eine Positioniervorrichtung zur Bewegung und Positionierung der Heizeinrichtung unter der Kochfeldplatte auf. Die Positioniervorrichtung ist für genau diese Heizeinrichtung vorgesehen und mit dieser verbunden, wobei sie zu einer Bewegung der Heizeinrichtung entlang einer geschlossenen Bahn ausgebildet ist mit einer Führung der Heizeinrichtung derart, dass die Heizeinrichtung ihre Orientierung bzw. ihre Drehposition relativ zu dem Kochfeld beibehält.

## Beschreibung

### ANWENDUNGSGEBIET UND STAND DER TECHNIK

Die Erfindung betrifft ein Kochfeld mit einer Kochfeldplatte mit Heizbereich und mindestens einer darunter angeordneten Heizeinrichtung. Des Weiteren betrifft die Erfindung ein Verfahren zur Positionierung einer Heizeinrichtung an einem solchen Kochfeld.

Es ist aus der DE 112008000413 B4 bekannt, ein Induktionskochfeld mit bewegbaren Heizeinrichtungen in Form von Induktionsheizspulen auszubilden, wobei diese Heizeinrichtungen mittels Aktuatoren unter einer Kochfeldplatte bewegt werden können. Durch das Bewegen der Heizeinrichtungen kann eine Heizeinrichtung genau unter einem aufgesetzten Kochgefäß platziert werden. Werden für ein aufgesetztes Kochgefäß zwei oder noch mehr Heizeinrichtungen benötigt für eine optimale Beheizung, so werden entsprechend viele Induktionsheizeinrichtungen unter dem Kochgefäß platziert mittels Aktuatoren, um eine mittlere Heizleistung über einer Fläche einer dadurch gebildeten Kochstelle zu homogenisieren.

### AUFGABE UND LÖSUNG

Der Erfindung liegt die Aufgabe zugrunde, ein eingangs genanntes Kochfeld sowie ein eingangs genanntes Verfahren zur Positionierung einer Heizeinrichtung an einem solchen Kochfeld zu schaffen, mit denen Probleme des Standes der Technik gelöst werden können und es insbesondere möglich ist, bei einfacher und gebrauchstauglicher Konstruktion des Kochfeldes bewegbare und optimal positionierbare Heizeinrichtungen zur Verfügung zu stellen. Insbesondere soll ein aufgestelltes Kochgefäß möglichst optimal beheizt werden.

Gelöst wird diese Aufgabe durch ein Kochfeld mit den Merkmalen des Anspruchs 1 sowie durch ein Verfahren mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für das Kochfeld oder nur für das Verfahren beschrieben. Sie sollen jedoch unabhängig davon sowohl für ein Kochfeld als auch für ein entsprechendes Verfahren selbstständig und unabhängig voneinander gelten können. Der Wortlaut der Ansprüche wird durch ausdrückliche Bezugnahme zum Inhalt der Beschreibung gemacht.

Es ist vorgesehen, dass das Kochfeld eine Kochfeldplatte mit einem Heizbereich aufweist. Dieser Heizbereich ist im Wesentlichen diejenige Fläche auf der Kochfeldplatte, auf der Kochgefäße aufgestellt werden können zum Beheizen bzw. unter der mindestens eine Heizeinrichtung des Kochfelds zumindest teilweise positioniert werden kann. Das Kochfeld weist mindestens eine Heizeinrichtung unter der Kochfeldplatte auf, vorteilhaft mehrere oder vier bzw. sechs, wobei die Heizeinrichtung in dem genannten Heizbereich bewegbar angeordnet ist. Eine Heizeinrichtung ist vorteilhaft flach und flächig, insbesondere kann es eine an sich bekannte Strahlungsheizeinrichtung oder eine Induktionsheizspule sein wie sie für Kochfelder bekannt sind. Eine Positioniervorrichtung ist vorgesehen, um die mindestens eine Heizeinrichtung zu bewegen und unter der Kochfeldplatte zu positionieren.

Erfindungsgemäß ist die genannte Positioniervorrichtung für genau diese Heizeinrichtung vorgesehen und mit dieser verbunden. Dies bedeutet also, dass pro genau einer Heizeinrichtung genau eine Positioniervorrichtung vorgesehen ist. So können die Heizeinrichtungen optimal und unabhängig voneinander positioniert bzw. bewegt werden. Möglicherweise kann eine Heizeinrichtung wegen einer anderen bereits positionierten Heizeinrichtung nicht völlig frei und nicht an jeder theoretisch möglichen Position positioniert werden. Dies ist aber dann ein Fall einer Interaktion bzw. Kollision von zwei Heizeinrichtungen, grundsätzlich sind sie mittels der Positioniervorrichtung frei bewegbar. Dazu kann die Heizeinrichtung mit der Positioniervorrichtung verbunden sein, unter Umständen auch von dieser getragen sein. Die Positioniervorrichtung ist dabei so ausgebildet, dass sie die zugehörige Heizeinrichtung entlang einer geschlossenen Bahn bewegen kann. Dies kann eine Ellipsenbahn oder vorteilhaft eine Kreisbahn sein. Dabei kann die Heizeinrichtung derart geführt werden, dass sie ihre Orientierung bzw. ihre Drehposition relativ zu dem Kochfeld beibehält. Dies ist von Vorteil, da dann genau bekannt und bestimmbar ist, in welcher Position der Heizeinrichtung sie wie ausgerichtet bzw. orientiert ist und welche Fläche sie überdeckt. Des Weiteren ist es dann möglich, was nachfolgend noch näher erläutert wird, dass elektrische Anschlüsse immer gleichbleibend ausgerichtet sind für deren Optimierung.

Durch diese Bewegung der Heizeinrichtung entlang einer definierten geschlossenen Bahn kann diese Heizeinrichtung zwar nicht jede Position innerhalb der geschlossenen Bahn bzw. allgemein unterhalb des Kochfelds einnehmen. Gleichzeitig kann dadurch aber eine relativ einfache Positioniervorrichtung gebaut werden, die sowohl viele Optionen ermöglicht als auch gleichzeitig einfach und betriebssicher ist.

In vorteilhafter Ausgestaltung der Erfindung kann die geschlossene Bahn eine runde Bahn sein. Besonders vorteilhaft ist es eine elliptische Bahn bzw. eine Kreisbahn. Ein Durchmesser einer solchen Bahn sollte zwischen 30% und 100% der Länge und/oder Breite der Heizeinrichtung liegen. Dadurch ist es möglich, unter einer Kochfeldplatte in dem Kochfeld mehrere Heizeinrichtungen anzuordnen, vorteilhaft vier Heizeinrichtungen. So stören sich deren Bewegungsbahnen nicht allzu sehr. Des Weiteren kann dann sozusagen jede Heizeinrichtung in ihrem Bereich eine Anpassung einer Position an ein aufgestelltes Kochgefäß bewirken. Darüber hinaus kann dadurch eine Positioniervorrichtung relativ einfach aufgebaut werden.

In weiterer Ausgestaltung der Erfindung sind eben mehrere Heizeinrichtungen unter der Kochfeldplatte angeordnet, besonders vorteilhaft in derselben Ebene. Dabei ist es bevorzugt, wenn mindestens zwei Heizeinrichtungen nebeneinander und mindestens zwei Heizeinrichtungen hintereinander vorgesehen werden, also insgesamt mindestens vier Heizeinrichtungen. Bei sehr breiten Kochfeldern, insbesondere mit einem Einbaumaß von 75cm oder sogar 90cm Breite, können drei oder sogar vier Heizeinrichtungen nebeneinander und zwei Heizeinrichtungen hintereinander vorgesehen sein, also insgesamt sechs oder acht Heizeinrichtungen. Vorteilhaft sind die sämtlich bewegbare Heizeinrichtungen.

Bevorzugt kann mindestens eine Heizeinrichtung, besonders bevorzugt jede Heizeinrichtung, Sensormittel zur Bestimmung ihres Überdeckungsgrades durch ein Kochgefäß aufweisen. Alternativ können mindestens einer Heizeinrichtung oder jeder Heizeinrichtung Sensormittel zur Bestimmung ihres entsprechenden Überdeckungsgrades durch ein Kochgefäß zugeordnet sein. Diese können optisch, resistiv, kapazitiv oder induktiv arbeitend ausgebildet sein.

Die Positioniervorrichtung kann eine rotierende Drehwelle samt einem Antrieb bzw. einem Antriebsmotor aufweisen, wobei die Drehwelle mit einem Ende des Dreharms verbunden ist. Eine Drehebene des Dreharms liegt vorteilhaft unterhalb der Kochfeldplatte bzw. auch unterhalb der Heizeinrichtungen und parallel zur Kochfeldplatte. Ein anderes freies Ende des Dreharms kann mit der Heizeinrichtung verbunden sein, vorteilhaft mit deren Unterseite. Durch einen gesteuerten Antrieb, insbesondere mit Positions-/Winkelerfassung, beispielsweise durch Verwendung eines Schrittmotors, kann die Drehposition und somit die Position der Heizeinrichtung stets erfasst sein und in einer Steuerung abgespeichert sein. Alternativ zu einer Positions-/Winkelerfassung, welche zusätzliche Bauteile bedeutet, können die vom Schrittmotor zurückgelegten Schritte gezählt werden, um die Position bzw. den Winkel zu erfassen. Um eine Bewegung der Heizeinrichtung definiert zu ermöglichen und dabei gleichzeitig die erfindungsgemäße Beibehaltung der Orientierung der Heizeinrichtung zu ermöglichen, kann die Positioniervorrichtung auch noch mindestens einen Führungsarm aufweisen, vorteilhaft zwei Führungsarme. Dieser Führungsarm ist vorteilhaft nicht angetrieben und sowohl mit der Heizeinrichtung drehbar verbunden als auch in dem Kochfeld drehbar gelagert. So ergibt sich eine durch mindestens zwei Arme bzw. Hebel genau definierte Bewegungsmöglichkeit für die Heizeinrichtung.

Durch eine Ausführung mit einem angetriebenen Dreharm und einem nicht angetriebenen Führungsarm kann es in den beiden Totpunkten, in denen die Arme in einer Flucht bzw. auf einer Linie liegen, zu einem statisch unbestimmten Fall kommen. Dreht sich der angetriebene Dreharm ausgehend von einem dieser Totpunkte beispielsweise im Uhrzeigersinn, so kann sich durch die statische Unbestimmtheit der nicht angetriebenen Führungsarm entweder, wie gewünscht, ebenfalls im Uhrzeigersinn aus dem Totpunkt heraus bewegen, oder aber auch gegen den Uhrzeigersinn. Letzteres muss vermieden werden, da in diesem Fall die Korrelation zwischen Drehwinkel des Antriebselementes und Position der Heizeinrichtung nicht mehr gegeben ist, und somit die Position der Heizeinrichtung nicht mehr genau bekannt ist bzw. unbestimmt ist. Somit funktioniert auch die Bestimmung der Kochgefäßpositionen auf der Kochfeldplatte nicht mehr. Zur Vermeidung solcher statischer Unbestimmtheiten können Schnappelemente beispielsweise mit Federn verwendet werden, insbesondere Spiralfedern. Eine andere Möglichkeit wäre es, beide Arme synchron anzutreiben, also zwei angetriebene Dreharme zu verwenden. Dies kann durch zwei Motoren erreicht werden oder durch einen Motor samt Synchronisierung der Arme durch Zahnräder, Ketten, Riemen odgl.. Eine weitere Möglichkeit ist es, einen Dreharm und zwei Führungsarme zu verwenden. In diesem Fall dürfen im Totpunkt nicht alle drei Arme in einer Flucht stehen. Vielmehr muss einer der Arme zu dieser Flucht parallel verschoben liegen.

Wenn Dreharme und Führungsarme, wie oben beschrieben, als Parallelführung ausgebildet sind und dazu parallel zueinander verlaufen ist es besonders gut möglich, die Orientierung der Heizeinrichtung relativ zu dem Kochfeld erfindungsgemäß beizubehalten. So kann auch eine exakte Kreisbahn für die Heizeinrichtung erreicht werden. Vorteilhaft kann eine Verbindung des freien Endes des Dreharms mit der Heizeinrichtung eine Wellendurchführung durch die Heizeinrichtung aufweisen von einer Unterseite auf eine Oberseite, also durch die Heizeinrichtung hindurch. Dies kann gut mit einer Drehbarkeit kombiniert sein. Oberhalb der Oberseite der Heizeinrichtung kann von der Wellendurchführung ein Tragarm abgehen, der parallel zum Dreharm verläuft. An seinem freien Ende, insbesondere über der Drehwelle bzw. in Verlängerung der Drehwelle, kann der Tragarm einen Temperatursensor und/oder einen Topferkennungssensor tragen. Dieser Sensor ist bevorzugt drehbar gegenüber dem Tragarm angeordnet, besonders bevorzugt mit einer freien Drehbarkeit. Dabei kann der Sensor an eine Unterseite der Kochfeldplatte angedrückt oder befestigt sein. Durch den Dreharm, die Wellendurchführung und den Tragarm ist es möglich, dass sich die Heizeinrichtung entlang ihrer Bahn bewegt und dabei der Sensor an derselben Stelle, nämlich eben oberhalb der Drehwelle, unter der Kochfeldplatte bleibt. Dadurch ist es möglich, dass der Sensor nicht durch ein Anliegen an der Unterseite der Kochfeldplatte daran entlangschleift, was an beiden Teilen eine Beschädigung bewirken könnte. Des Weiteren können so mögliche störende Schleifgeräusche vermieden werden. Derartige Temperatursensoren sind als Schutz vor Überhitzung einer Kochfeldplatte aus Glaskeramik üblich und von Vorteil. Des Weiteren können dadurch Funktionen wie temperaturgesteuertes bzw. automatisches Kochen unterstützt oder überhaupt erst ermöglicht werden. Topferkennungssensoren als vorgenannte Sensormittel können ebenfalls von Vorteil sein und auf dem Fachmann bekannte Art und Weise ausgebildet sein, beispielsweise optisch, resistiv, kapazitiv oder induktiv arbeiten.

In Ausgestaltung der Erfindung weist ein Sensor bzw. Temperatursensor elektrische Anschlüsse auf, welche parallel zueinander in die gleiche Richtung abgehen können. Dabei können sie parallel zur Oberseite bzw. zur Kochfeldplatte verlaufen. Es ist vorteilhaft vorgesehen, dass diese elektrischen Anschlüsse ihre Orientierung relativ zu dem Kochfeld beibehalten bei Bewegung der Heizeinrichtung, insbesondere eben der gesamte Sensor seine Position behält. Die elektrischen Anschlüsse können dabei einerseits entlang des vorgenannten Tragarms und des Dreharms und durch die genannte Wellenführung hindurch nach unten verlaufen unterhalb die Heizeinrichtung, um dort an eine Steuerung angeschlossen zu werden. Alternativ können sie, insbesondere mit einem flachen Leiter oder einem Folienleiter, an der Unterseite der Kochfeldplatte entlang und somit oberhalb der Heizeinrichtung geführt sein zu einem Außenbereich des Heizbereichs bzw. der Kochfeldplatte. Dort können sie dann nach unten zu einer Steuerung geführt sein. Die elektrischen Anschlüsse können gleichzeitig federnde Eigenschaften aufweisen und zum Andrücken des Sensors an die Kochfeldplatte ausgebildet sein.

Um bei oberhalb der Heizeinrichtung positioniertem Temperatursensor, insbesondere samt dessen elektrischen Anschlüssen, keine Beschädigung der Heizeinrichtung zu bewirken sowie auch um möglichst keine Schleifgeräusche einer Heizeinrichtung an der Unterseite der Kochfeldplatte hervorzurufen oder eine gegenseitige mechanische Beschädigung, kann vorgesehen sein, dass die Oberseite der Heizeinrichtung möglichst geschlossen und glatt sowie reibungsarm ausgebildet ist. Insbesondere sollte sie aus einem gegenüber Reibung relativ widerstandsfähigen Material bestehen, beispielsweise aus Mikanit, eventuell versehen mit einer Teflonbeschichtung oder einer sonstigen temperaturfesten und glatten Beschichtung. Auch metallische oder keramische Materialien eignen sich für die Oberfläche des Temperatursensors.

Ein vorgenannter Führungsarm braucht keinen Antrieb und kann, während der Dreharm vorteilhaft in einem Mittelbereich, insbesondere an einem Mittelpunkt, der Heizeinrichtung angebracht ist, an einem Außenbereich der Heizeinrichtung angebracht sein. Vorteilhaft ist ein Führungsarm auf einer von einer links und/oder rechts benachbart angeordneten Heizeinrichtung abgewandten linken und/oder rechten Seite der Heizeinrichtung vorgesehen. Es können auch zwei oder noch mehr Führungsarme vorgesehen sein für eine sichere und zuverlässige Führung der Heizeinrichtung bei Bewegung.

Die Länge von Dreharm und/oder Führungsarm kann deutlich unter der Länge einer kürzeren Lateralseite der Heizeinrichtung liegen, beispielsweise zwischen 15% und ss50% von deren Länge betragen.

Ähnlich wie für den Sensor beschrieben kann auch die Heizeinrichtung, insbesondere an einem seitlich angeordneten Bereich, eine gemeinsame Anschlusseinrichtung für ihren Anschluss aufweisen. Diese einzige bzw. gemeinsame Anschlusseinrichtung weist zumindest sämtliche Leistungsanschlüsse für die Heizeinrichtung auf, insbesondere auch zusätzliche Sensoranschlüsse odgl.. Bei Bewegung der Heizeinrichtung bleiben diese Leistungsanschlüsse auch stets an derselben Winkelposition relativ zu einem Mittelpunkt der Heizeinrichtung bzw. sie behalten ihre Orientierung relativ zu dem Kochfeld bei. So ist ihr elektrischer Anschluss mit etwas längeren flexiblen Kabeln oder Leiter an eine Ansteuerung des Kochfelds, insbesondere ein Leistungsteil, einfach.

In Ausgestaltung der Erfindung kann vorgesehen sein, dass sich die Drehbereiche bzw. Bewegungsbereiche von seitlich nebeneinander angeordneten Heizeinrichtungen überlappen, ebenso die Bewegungsbereiche von hintereinander angeordneten Heizeinrichtungen. Die Überlappung von hintereinander angeordneten Heizeinrichtungen ist dabei vorteilhaft größer als diejenige von seitlich nebeneinander angeordneten Heizeinrichtungen, besonders vorteilhaft 1,5 Mal bis 10 Mal oder 2 Mal bis 10 Mal so groß. So kann dem Umstand Rechnung getragen werden, der bei der Erfindung entdeckt wurde, dass es eher wichtig ist und in vielen Fällen praxistauglich ist, wenn sehr große Kochgefäße, die von zwei Heizeinrichtungen beheizt werden sollen, nebeneinander angeordnet werden als hintereinander. Somit ist es eher wichtig, dass zwei hintereinander angeordnete Heizeinrichtungen eine gemeinsame Kochstelle für ein aufgesetztes Kochgefäß bilden können und deswegen, angepasst an die Position des aufgesetzten Kochgefäßes, eher größere Bewegungsmöglichkeiten haben sollten als dies bei seitlich nebeneinander angeordneten Heizeinrichtungen der Fall ist. Gerade auch bei den vorgenannten besonders breiten Kochfeldern werden große Kochgefäße eher seitlich nebeneinander aufgestellt als hintereinander, gerade auch weil dies hintereinander teilweise gar nicht direkt hintereinander möglich ist.

Es ist möglich, benachbart angeordnete Heizeinrichtungen relativ nahe zueinander zu bewegen. Dabei können sie unter Umständen sogar direkt aneinander anliegen oder anschlagen. Ihr Abstand zueinander kann vorteilhaft weniger als 10 mm betragen, besonders vorteilhaft maximal 2 mm bis 5 mm. Gerade wenn Induktionsheizspulen als Heizeinrichtungen verwendet werden, bei denen sich die Wicklungen bzw. ein Spulendraht relativ nahe am Außenrand der Heizeinrichtung befinden, kann so ein nahezu lückenloser Zusammenschluss von zwei nebeneinander liegenden Heizeinrichtungen bzw. Induktionsheizspulen erreicht werden, um gemeinsam ein größeres aufgesetztes Kochgefäß zu beheizen. Bei den eingangs genannten Strahlungsheizeinrichtungen ist üblicherweise oder sogar zwingend noch ein relativ dicker Randbereich als thermische Dämmung vorgesehen, der dann eine naturgemäß relativ breite Lücke zwischen nebeneinander angeordneten und dabei aneinander anliegenden Heizeinrichtungen bedeuten würde.

Induktionsheizspulen als Heizeinrichtungen weisen vorteilhaft eine rechteckige Form auf. Diese Form sollte nicht allzu lang gezogen sein, vorteilhaft beträgt eine Differenz zwischen langen Lateralseiten und kurzen Lateralseiten maximal 25%. Besonders vorteilhaft beträgt eine solche Differenz maximal 20%, beispielsweise 10% bis 15%. Vorzugsweise sind die Induktionsheizspulen mit ihrer längeren Erstreckung von links nach rechts in dem Kochfeld angeordnet, so dass ihre kürzeren Lateralseiten in Richtung von vorne nach hinten verlaufen.

In weiterer Ausgestaltung der Erfindung ist es möglich, dass die vorgenannten Sensoren bei einer Bewegung der Heizeinrichtung unter der Kochfeldplatte nach unten gezogen oder bewegt werden, insbesondere also von der Kochfeldplatte beabstandet bzw. entfernt werden. In diesem Fall ist es besonders gut möglich, dass auch die Sensoren auf einer bestimmten Bahn unterhalb der Kochfeldplatte bewegt werden, da sie dann ja nicht an deren Unterseite entlang reiben oder kratzen, vorteilhaft zusammen mit der Heizeinrichtung bewegt werden.

Temperatursensoren könnten auch mit geringer Kraft an die Kochfeldplatte angedrückt werden. Die Druckkraft sollte dabei für einen ausreichenden thermischen Kontakt sorgen, gleichzeitig jedoch so klein sein, dass die dadurch resultierende Reibkraft zwischen Kochfeldplatte und Temperatursensor zu einer vertretbaren Abnutzung und vertretbaren Reibgeräuschen führt. Dabei hat es sich als besonders vorteilhaft herausgestellt, wenn Federwirkung und elektrische Kontaktierung über die gleichen Funktionselemente realisiert sind.

Bei optischer Temperaturmessung ist kein Kontakt des Temperatursensors mit der Glaskeramik notwendig, weshalb dieses Funktionsprinzip für einen sich mitbewegenden Temperatursensor vorteilhaft ist.

Bei einem erfindungsgemäßen Verfahren, mit dem eine Heizeinrichtung an einem vorbeschriebenen Kochfeld positioniert werden kann, kann mittels einer Sensorik oder sonstwie entdeckt werden, dass ein Kochgefäß über einer Heizeinrichtung auf eine Kochfeldplatte aufgestellt wurde oder aber ein bereits aufgestelltes Kochgefäß in seitlicher Richtung bewegt wird. Dabei steht dieses Kochgefäß dann dezentriert zu der Heizeinrichtung, insbesondere deutlich dezentriert bzw. entfernt. Eine solche Sensorik ist dem Fachmann allgemein bekannt und kann auch durch die Heizeinrichtungen selbst gebildet werden, wenn es Induktionsheizspulen sind, oder wenn eine sonstige Heizeinrichtung beispielsweise einen induktiven Sensor aufweist zur Kochgefäßerkennung.

Dann wird die Heizeinrichtung zumindest teilweise entlang einer geschlossenen Bahn bewegt, wie dies zuvor beschrieben worden ist. Insbesondere durchläuft sie eine vollständig geschlossene Bahn, macht also sozusagen einen Umlauf, zumindest soweit dies möglich ist. Dabei wird jeweils ihre Position relativ zu dem Kochgefäß bzw. die Entfernung dazu erfasst und ausgewertet. Danach wird die Heizeinrichtung in eine optimale Position zu dem Kochgefäß gebracht, wobei zwei Fälle unterschieden werden können. In einem ersten Fall ist es die einzige Heizeinrichtung für dieses Kochgefäß bzw. ihre Größe reicht, dass sie alleine das Kochgefäß beheizt. Dann kann sie in eine solche Position gebracht werden, dass das Maximum der Überdeckung durch das Kochgefäß vorliegt bzw. ein Maximum der elektromagnetischen Kopplung zwischen Kochgefäß und induktiver Heizeinrichtung erkannt wird. Normalerweise kommt der Mittelpunkt der Heizeinrichtung dann in etwa unter dem Mittelpunkt des Kochgefäßes zu liegen bzw. möglichst nahe zu dem Mittelpunkt des Kochgefäßes. Dies ist auf einen seitlichen bzw. lateralen Versatz bezogen. Bei Kochgefäßen mit Mischböden, die nur teilweise aus ferritischen Materialien bestehen und häufig einen Anteil von Aluminium aufweisen, wird auf einem Induktionsfeld bzw. über einer induktiv arbeitenden Heizeinrichtung das Maximum der elektrischen Kopplung zwischen Heizeinrichtung und Kochgefäß gesucht. Als elektrische Kopplung soll der induktiv durch den Topfboden eingekoppelte Wirkwiderstand des Kochgefäßes verstanden werden.

In einem zweiten Fall, in dem die Heizeinrichtung dieses Kochgefäß zusammen mit mindestens einer weiteren Heizeinrichtung beheizen soll, durchlaufen die Heizeinrichtungen jeweils eine vorbeschriebene Bewegung entlang einer geschlossenen oder vorteilhaft vollständigen Bahn. Dann werden die Heizeinrichtungen derart unterhalb des Kochgefäßes angeordnet, dass die Summe der einzelnen Überdeckungen ein Maximum aufweist. Vorteilhaft werden die einzelnen Heizelemente in eine solche Position gebracht, dass sie jeweils eine möglichst gleiche Überdeckung durch das Kochgefäß aufweisen. Gerade wenn die Heizeinrichtungen gleich große Induktionsheizspulen sind, kann der Überdeckungsgrad durch das Kochgefäß an zwei Induktionsheizspulen durch Vergleich ihrer elektrischen bzw. Schwingungsparameter erfolgen.

Bei rechteckig ausgebildeten Induktionsheizeinrichtungen sollte vorgesehen sein, dass die Richtung des Stromflusses zur Erzeugung des magnetischen Feldes bei zwei benachbarten Kanten bzw. äußeren Wicklungen gleichsinnig ist. Eine Phasendifferenz ist bevorzugt kleiner als oder gleich wie 90° bei gleicher Frequenz.

Vorteilhaft ist vorgesehen, dass die Heizeinrichtungen, insbesondere wenn es Induktionsheizspulen sind, einen Träger oder eine Trägerschale aufweisen. So können beispielsweise im Fall einer Induktionsheizspule, die vorteilhaft einlagig ausgebildet ist, deren Windungen aus dickem Spulendraht oder Spulenlitze auf einem solchen flachen Träger aufliegen. Die Positioniervorrichtung bewegt dann den Träger oder die Trägerschale, wobei diese dann sozusagen zur Heizeinrichtung gehören bzw. ein Bestandteil davon sind.

Vor einem Heizbetrieb einer aufgestellten Kochgefäßes wird in einem erfindungsgemäßen Kochfeld also eine Art Scan, insbesondere aller Heizeinrichtungen gleichzeitig, durchgeführt, indem über deren gesamte Bewegungsbahn bzw. Rotationswinkel der Verlauf der Überdeckung durch ein Kochgefäß bzw. die davon gebildete Kochstelle festgestellt wird. Aus diesen Daten ermittelt eine Kochfeldsteuerung die optimale Position einer oder mehrerer Heizeinrichtungen.

Wird eine Veränderung der Überdeckung erkannt, entweder im Heizbetrieb oder durch periodische Durchführung der Kochgefäßerkennung ohne Heizen, dann wird der Heizbetrieb unterbrochen. Es wird ein erneuter Scan mit Bestimmen der neuen Position des Kochgefäßes durchgeführt und anschließend die mindestens eine Heizeinrichtung wie zuvor entsprechend positioniert. Auf deren neuer Position wird der Heizbetrieb fortgeführt, vorteilhaft mit derselben Leistungseinstellung aber angepassten Betriebsparametern wie zuvor.

In Weiterbildung der Erfindung kann ein Scan des gesamten Heizbereichs in periodischen Abständen vorgesehen erfolgen, um zuvor nicht erkannte, hinzugefügte Kochgefäße erkennen zu können. Des Weiteren kann auch vorgesehen werden, dass von Zeit zu Zeit die einer oder mehrere Heizeinrichtungen während des Heizbetriebs unter der Kochstelle in Schritten bewegt werden, um Veränderungen der Aufstellposition des Kochgefäßes erkennen zu können und ggf. die Kochstelle optimal anpassen zu können.

Durch Messen der Überdeckung einer oder mehrerer Heizeinrichtungen an unterschiedlichen Positionen der Bewegungsbahn kann die Position mit der besten Wärmeübertragung, im Fall von Induktionsheizspulen der besten Ankopplung, und somit höchstem Wirkungsgrad gesucht werden. Durch gelegentliches Überprüfen der Topferkennung auf benachbarten Drehpositionen kann geprüft werden, ob das zu beheizende Kochgefäß bewegt worden ist, so dass ggf. die Position der einen oder mehreren Heizeinrichtungen zum Heizen nachgeführt werden kann.

Vorzugsweise wird bei einem Scan zur Kochgefäßerkennung zuerst eine Grobanalyse der Überdeckung des gesamten Heizbereichs mit wenigen Schritten über der gesamten Bewegungsbahn durchgeführt, beispielsweise in 45°- oder 30°-Schritten. Anschließend wird um die dabei gefundene optimale Position der Überdeckung eine Feinanalyse durchgeführt, beispielsweise in 10°- oder 5°-Schritten. Die optimale Position bzw. die mit der maximalen Effizienz wird bestimmt, indem auf allen vorgesehenen Positionen von einer oder mehrerer Induktionsheizspulen der vom Kochgefäß eingekoppelte Widerstand in die Induktionsheizspule bestimmt wird, und die Position mit der größten Kopplung gewählt wird. Diese entspricht dann der größten Überdeckung.

Bei einem Scan zur Kochgefäßerkennung werden zumindest zwei hintereinander platzierte Heizeinrichtungen quasi gleichzeitig bewegt entlang ihrer jeweiligen Bewegungsbahn, vorzugsweise alle. Zur elektrischen Entkopplung bei Induktionsheizspulen kann immer, während eine Induktionsheizspule zur nächsten Position bewegt wird, auf der anderen Induktionsheizspule die Kochgefäßerkennung durchgeführt werden. Des Weiteren kann vorgesehen sein, dass nicht nur die eine Induktionsheizspule bewegt wird und eine Bewegungsbahn durchläuft, sondern eine andere Induktionsheizspule, auch wenn sie gerade im Heizbetrieb arbeitet, beiseite bzw. sozusagen aus dem Weg bewegt wird, um der bewegten Induktionsheizspule das vollständige Durchlaufen der Bewegungsbahn zu ermöglichen.

Möglicherweise ist es notwendig, dass eine Heizeinrichtung nicht genau in der optimalen Position betrieben wird, wenn es an dieser Position zu einer zusätzlichen Beheizung eines eigentlich nicht dieser Heizeinrichtung zugeordneten Kochgefäßes kommen würde, was als Konflikt bezeichnet wird. Die Heizeinrichtung wird in diesem Falle absichtlich in eine etwas weiter entfernte und dadurch leicht schlechtere Position bewegt, heizt dadurch jedoch nur das gewollte Kochgefäß, nicht aber ein nahestehendes, das ja eigentlich zu einer anderen Heizeinrichtung gehört.

Aus dem Scan des kompletten Heizbereichs können auch Informationen über die Form eines Kochgefäßes gezogen werden. So kann bei großflächiger, länglicher Überdeckung mehrerer Heizeinrichtungen durch ein Kochgefäß darauf geschlossen werden, dass es sich um einen Bräter handeln muss. Dies kann das Kochfeld dem Benutzer anzeigen, sowie die entsprechenden Heizeinrichtungen selbstständig miteinander koppeln bzw. bzgl. einer Leistungseinstellung gleich einstellen. Das gilt auch für eine sehr große bzw. sogenannte Giant-Kochzone in der Mitte des Kochfeldes.

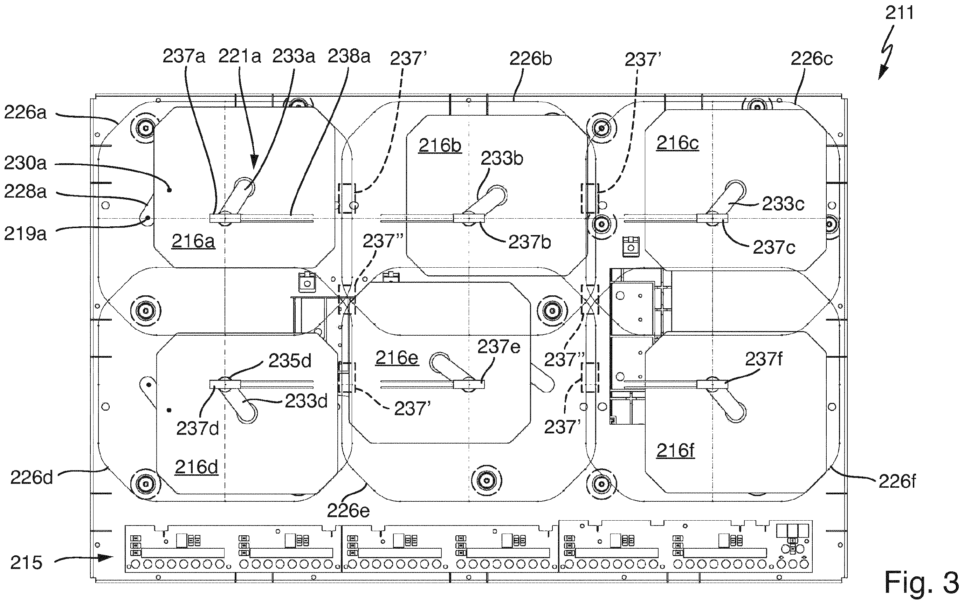

Ein Grundkonzept weist ein Kochfeld mit vier Heizeinrichtungen auf. Es können aber beliebig viele oder auch nur eine Zweier-Einheiten mit überlappenden Heizzonen nebeneinander angeordnet werden. Auch können mehr als zwei Heizeinrichtungen überlappend hintereinander angeordnet sein. Weitere Varianten sind vier Induktionsheizspulen für ein 60cm-Kochfeld wie beschrieben, sechs oder acht Induktionsheizspulen für ein 90cm-Kochfeld, vorteilhaft mit identischen Induktionsheizspulen wie beschrieben, und sechs Induktionsheizspulen für ein 75cm-Kochfeld. Hier wäre auch ein horizontaler Überlappungsbereich sinnvoll möglich, siehe unten Fig. 3, wobei ggf. auch quadratische Induktionsheizspulen verwendet werden können.

Es kann sicherheitstechnisch notwendig sein, dass die Temperatur der Kochfeldplatte gemessen wird, um eine übermäßige Erwärmung von Kochgefäßen bzw. der Kochfeldplatte selbst zu verhindern. Hierzu können Temperatursensoren in der Mitte der Heizeinrichtungen angeordnet sein. Bei flächig verteilten Induktionsheizspulen sind vorteilhaft sogar mehrere solcher Sensoren über den gesamten Heizbereich verteilt, um verschiedene Aufstellpositionen von Kochgefäßen abzudecken.

Die vorliegende Erfindung hat den Vorteil, dass die Position der Heizeinrichtungen nicht stetig verändert wird. Somit muss ein vorgenannter Sensor auch nicht in allen Positionen Kontakt zur Kochfeldplatte haben. Ist der Kontakt zur Kochfeldplatte nur an diskreten Winkelschritten notwendig, so kann ein Abhebemechanismus an diskreten Orten beispielsweise über eine mechanische Zwangsführung, beispielsweise Nocken odgl., realisiert werden. Solche Nocken sorgen beispielsweise nur in 15°-Schritten oder 20°-Schritten für ein Anpressen des Sensors an die Kochfeldplatte. Zwischen diesen Positionen ist der Sensor kraftfrei. Das hat aber zur Folge, dass die Heizeinrichtungen auch nur in der gleichen Schrittweite platziert werden können.

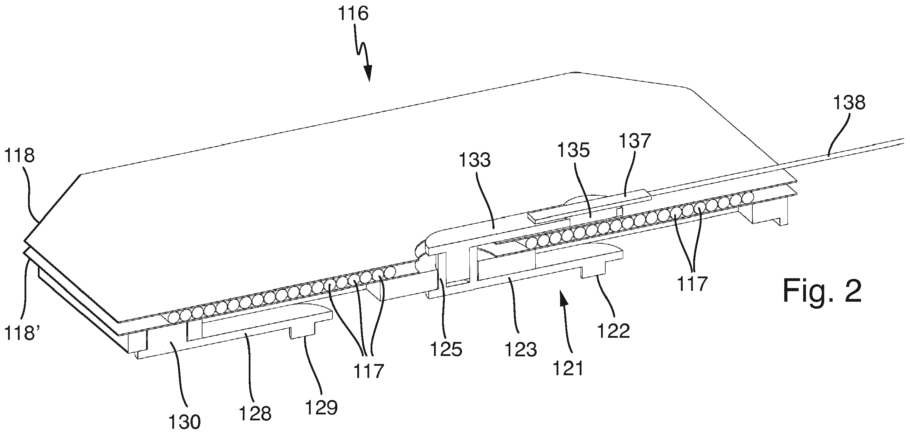

In einer anderen Ausgestaltung bewegen sich die Sensoren nicht mit den Heizeinrichtungen, sondern sind ortsfest gelagert. Fig. 2 zeigt eine mögliche technische Umsetzung solch einer Heizeinrichtung. Der Sensor sitzt dabei über der Drehwelle. Er kann jedoch nicht gerade durch die Heizeinrichtung hindurch geführt werden. Eine Durchführung ist lediglich in der Mitte der Heizeinrichtung möglich. Somit muss der Sensor mittels eines exzentrischen Tragarms gehalten werden, der ihn wiederum im Drehmittelpunkt über der Drehwelle platziert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Draufsicht auf ein erfindungsgemäßes Kochfeld ohne Kochfeldplatte mit vier bewegbaren Induktionsheizspulen,
- Fig. 2: eine schräge Schnittdarstellung durch eine Induktionsheizspule mit einer erfindungsgemäßen Positioniervorrichtung und ortsfest angeordnetem Temperatursensor darüber,
- Fig. 3: eine Draufsicht auf ein weiteres erfindungsgemäßes Kochfeld ähnlich Fig. 1 mit sechs Induktionsheizspulen und Temperatursensoren entsprechend Fig. 2,
- Fig. 4: eine Abwandlung des Kochfelds aus Fig. 1,
- Fig. 5 bis 10: verschiedene Positionen der Induktionsheizspulen entsprechend Fig. 1 mit Anordnung unter verschiedenen Konfigurationen von Kochgefäßen unterschiedlicher Größe.

### DETAILLIERTE BESCHREIBUNG DER AUSFÜHRUNGSBEISPIELE

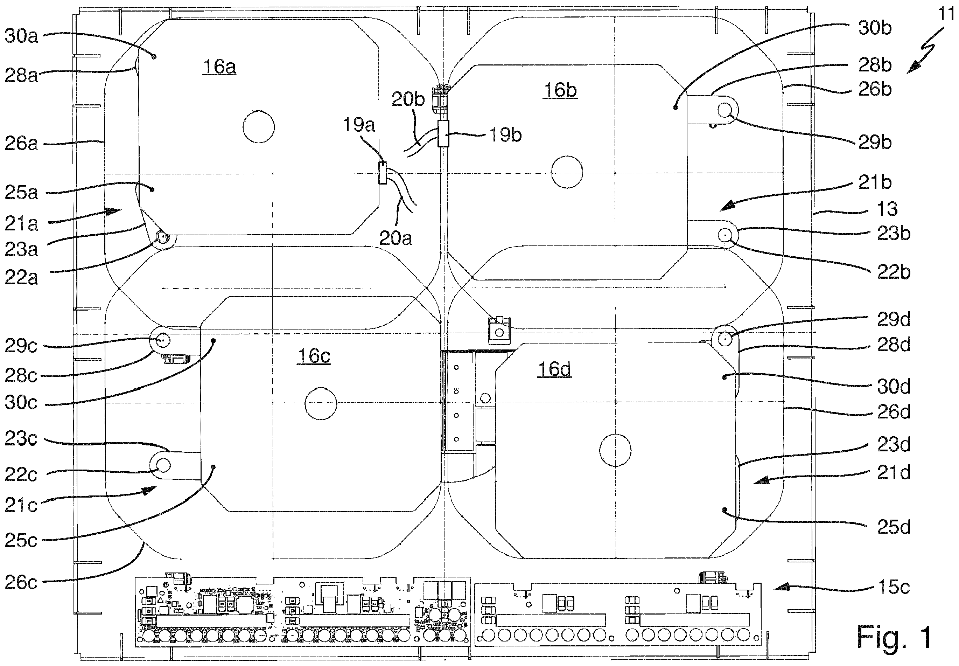

In der Fig. 1 ist eine Draufsicht auf ein erfindungsgemäßes Induktionskochfeld 11 dargestellt mit einer durch eine Umrandung angedeuteten Kochfeldplatte 13, die vorteilhaft wie üblich aus Glaskeramik besteht, insbesondere mit einer dem Fachmann bekannten Noppung an der Unterseite. Im vorderen Bereich des Kochfelds 11 ist unter der Kochfeldplatte 13 eine Bedieneinrichtung 15 angeordnet mit einer Vielzahl von Anzeigeelementen und Bedienelementen, insbesondere mit kapazitiven Berührsensoren. Des Weiteren sind in einem Kochbereich, der sozusagen von der wesentlichen Fläche der Kochfeldplatte 13 abzüglich der Fläche der Bedieneinrichtung 15 gebildet wird, vier Induktionsheizspulen 16a bis 16d als Heizeinrichtungen angeordnet. Sämtliche Induktionsheizspulen 16a bis 16d sind bewegbar ausgebildet und insbesondere auch gleich groß bzw. gleich ausgebildet. Diese Induktionsheizspulen 16 sind im Wesentlichen rechteckig ausgebildet mit abgeschrägten Ecken. Sie sind ungefähr 15% breiter als tief, wobei das Verhältnis ihrer Lateralseiten zueinander in etwa dem Verhältnis von Breite zu Tiefe des Kochfelds 11 oder des genannten Kochbereichs entsprechen kann.

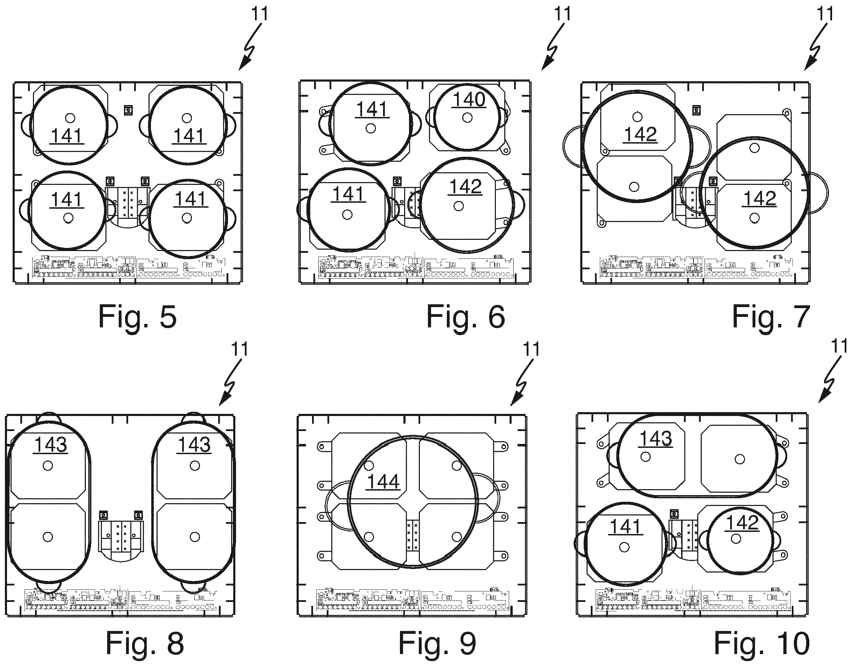

Wie aus der Fig. 2 in der geschnittenen Schrägdarstellung zu ersehen ist, weisen die dort dargestellten, im Prinzip konstruktionsgleichen Induktionsheizspulen 116 eine Vielzahl von Windungen 117 auf. Diese definieren die eigentliche Induktionsheizspule. Sie können, wie in Fig. 2 dargestellt ist, mit einem gewissen Abstand zu den Außenkanten einer Mikanitplatte 118 oben darauf und einer Mikanitplatte 118' darunter verlaufen. Diese beiden Mikanitplatten 118 und 188' sind gleich groß und weisen dieselbe Form auf. Der Abstand der im Wesentlichen entsprechend der Außenform verlaufenden Windungen 117 zu den Außenabmessungen bzw. Außenrändern kann zwischen 5 mm und 15 mm liegen. Vorteilhaft sollte er relativ gering sein, um die Fläche der Induktionsheizspule 116 und somit auch der Mikanitplatten 118 und 118' gut auszufüllen. Dies ist insbesondere auch von Vorteil, um, wie beispielsweise die nachfolgenden die Fig. 6 bis 8 zeigen, bei möglichst naher Anordnung nebeneinander auch die tatsächlichen Induktionsheizspulen mit möglichst geringer Lücke anordnen zu können.

Eine Positioniervorrichtung 121 weist eine vorgenannte Drehwelle 122 auf, die nach unten in das Kochfeld bzw. unter ein Induktorträgerblech reichen kann und dort mit einem Antrieb verbunden ist, beispielsweise einem Getriebeantrieb mit Elektromotor, vorteilhaft einem Schrittmotor. Das andere freie Ende des Dreharms 123 läuft in einer Art Anlenkpunkt 125, der hier nach Art einer Buchse oder Hohlwelle ausgebildet ist. Hier kann die untere Mikanitplatte 118' evtl. auch mit einer hier angedeuteten Kunststoffplatte als Träger verbunden sein und darauf aufliegen. Oben in dem buchsenartigen Anlenkpunkt 125 ist ein nach unten weisender Achsstummel eines freien Endes eines Tragarms 133 angeordnet, vorteilhaft drehfest bzw. verdrehsicher, beispielsweise eingeklebt. Am anderen freien Ende weist der Tragarm 133 einen in ihm drehbaren Sensorträger 135 auf, beispielsweise in Form einer kreisrunden Scheibe. Auf diesem drehbaren Sensorträger 135 ist ein Temperatursensor 137 angeordnet. Von diesem geht eine Anschlussleitung 138 nach rechts weg. Somit ist der Temperatursensor 137 an sich beliebig drehbar relativ zu dem Tragarm 133. Es ist auch zu erkennen, dass der Sensorträger 135 genau über der Drehwelle 122 angeordnet ist bzw. ihre Drehachsen miteinander fluchten. Da die Drehwelle 122 sozusagen immer an derselben Stelle verbleibt und sich lediglich dreht, gilt dies auch für den Sensorträger 135. Er kann wegen seiner Drehbarkeit auch bewirken, dass der von ihm getragene Temperatursensor 137 stets an derselben Stelle verbleibt und stets seine Orientierung beibehält.

Links in der Fig. 2 ist als weiterer Teil der Positioniervorrichtung 121 ein Führungsarm 128 dargestellt. Er weist an einem rechten freien Ende einen Drehpunkt 129 auf, der als einfacher Achsstummel in einer entsprechenden Führung unter der Induktionsheizeinrichtung 116 gelagert sein kann, beispielsweise in einem vorgenannten Tragblech. Ein einziger Antrieb für eine Induktionsheizspule 116 über die Drehwelle 122 wird als ausreichend angesehen, damit der Aufwand für den Antrieb nicht zu groß wird.

An einem linken freien Ende des Führungsarms 128 ist ein nach oben gerichteter Anlenkpunkt 130 in Form eines kurzen dicken runden Achsstummels vorgesehen. Dieser greift in eine entsprechende Aufnahme an der unteren Mikanitplatte 118' ein, insbesondere in einem vorgenannten Kunststoffträger für diese.

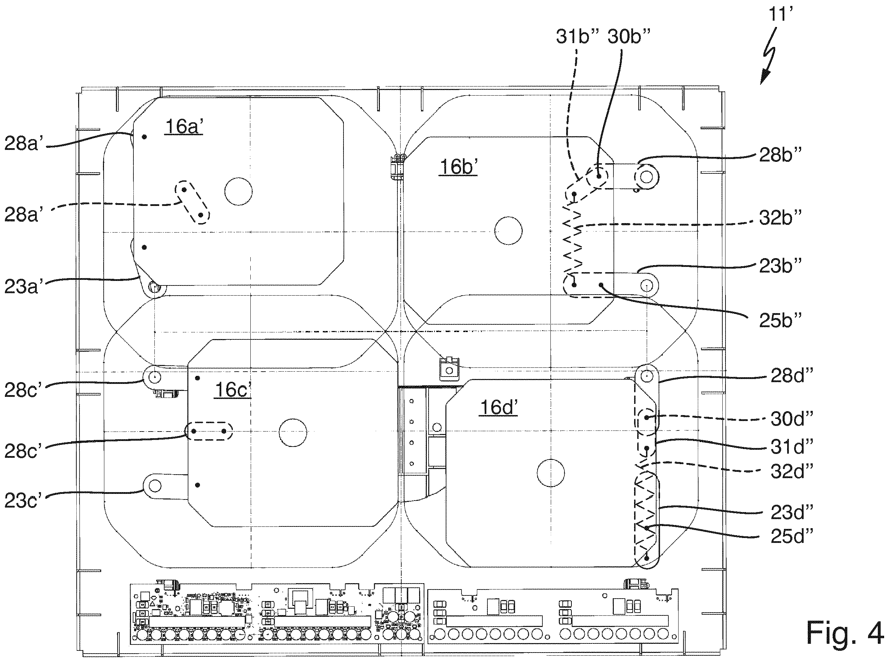

Der Dreharm 123 und der Führungsarm 128 sind parallel zueinander und insbesondere auch gleich lang. Somit bilden sie eine Parallelführung. Damit diese aber auch stets zwangsgeführt und wiederholbar genau ist kann eine weitere Verbindungsstange zwischen den beiden vorgesehen sein, beispielsweise von Anlenkpunkt 125 zu Anlenkpunkt 130 oder von einem Mittenbereich des einen Arms 123 zu einem Mittenbereich des anderen Arms 128. Diese Verbindungsstange kann beispielsweise auch als Feder ausgebildet sein, evtl. mit einem zusätzlichen Schnappelement, siehe Fig. 4. Alternativ können zwei gleiche Führungsarme 128 vorgesehen sein, was leicht vorstellbar ist, siehe ebenfalls Fig. 4. Sie sollten aber nicht in einer Linie mit dem Dreharm 123 liegen.

Abweichend von der Darstellung der Fig. 2, die eben auch den Temperatursensor 137 aufweist mit seiner ortsfesten Anbringung samt Drehbarkeit, kann eine Ausbildung der Positioniervorrichtung 21 entsprechend Fig. 1 vorgesehen sein. Dort ist bei einer Induktionsheizspule 16a links oben im Kochfeld 11 an deren linken unteren Eckbereich eine Positioniervorrichtung 21 a mit einer Drehwelle 22a, einem Dreharm 23a und einem Anlenkpunkt 25a vorgesehen. Ein Führungsarm 28a mit einem nicht dargestellten Drehpunkt und einem Anlenkpunkt 30a ist an dem linken oberen Eckbereich der Induktionsheizspule 16a vorgesehen. Somit kann eine Positioniervorrichtung 21 a auch eine Drehwelle 22a aufweisen, die nicht unter dem Mittenbereich der Induktionsheizspule 16a angeordnet ist. Dann kann allerdings der Fall auftreten, dass ein Andrücken der Induktionsheizspule 16a an einer Unterseite der Kochfeldplatte 13 schwieriger ist.

Alternativ kann man sich auch leicht anhand der Fig. 1 und 2 vorstellen, dass entsprechend Fig. 2 ein zentraler Dreharm unter dem Mittelbereich einer Induktionsheizspule 16 vorgesehen ist mit zwei an einer Außenseite vorgesehenen Führungsarmen 28. Dann wäre nicht nur der Führungsarm 28 entsprechend Fig. 1 vorgesehen, sondern der Dreharm 23 wäre auch ein Führungsarm ohne Antrieb. Mit drei solchen Armen bzw. Hebeln, von denen einer angetrieben ist, kann eine sichere Positionierung bzw. Bewegung der Induktionsheizspule erfolgen, wobei jederzeit eine Ausrichtung bzw. Orientierung der Induktionsheizspule 16 relativ zum Kochfeld 11 erhalten bleibt.

Bei den Induktionsheizspulen 16a und 16b sind jeweils an den zur seitlich benachbarten Induktionsheizspule 16 weisenden Seiten Anschlusseinrichtungen 19a und 19b angeordnet, und zwar mit Versatz. Dieser Versatz dient dazu, dass bei einer Platzierung der Anschlusseinrichtungen 19a und 19b direkt nebeneinander kein Kollision bzw. keine Berührung auftritt. Von den Anschlusseinrichtungen 19a und 19b gehen jeweils Anschlusskabel 20a und 20b ab. Diese Anschlusseinrichtungen 19a und 19b samt Anschlusskabel 20a und 20b weisen stets dieselbe Orientierung auf, also stets dieselbe Ausrichtung, aber ihre Position wechselt. Somit können auch die Anschlusskabel 20a und 20b leichter gebrauchstauglich und sicher verlegt sein, wenngleich sie auch einen deutlichen Bewegungsspielraum benötigen.

Außerdem sind noch die Bewegungsbahnen 26a bis 26d der Induktionsheizspulen 16a bis 16d dargestellt als deren jeweilige Bewegungsumläufe, wobei die vier Bewegungsbahnen 26a bis 26d gleich ausgebildet sind. Aus der Fig. 1 ist auch gut zu ersehen, dass sich die Bewegungsbahnen 26a/26b und 26c/26d Richtung von links nach rechts nicht überlappen, sondern die entsprechenden Induktionsheizspulen 16 jeweils gerade aneinander grenzen oder nur sehr geringen Abstand aufweisen. In Richtung von vorne nach hinten dagegen überlappen sich die Bewegungsbahnen 26a/26c und 26b/26d deutlich.

Anhand der Fig. 2 ist es auch leicht vorstellbar, dass ein Temperatursensor nicht nur bei einer Positioniervorrichtung bzw. einem Kochfeld vorgesehen sein kann, bei dem einer der Arme, insbesondere ein angetriebener Dreharm, in einen Mittelbereich der Induktionsheizeinrichtung mit dieser verbunden ist bzw. durch sie hindurchführt. In ähnlicher Form könnte dies auch bei einem seitlich angeordneten Dreharm entsprechend dem Führungsarm 128 vorgesehen sein. Hier wäre nur das Problem, dass, wie die Darstellung der Fig. 2 zeigt, in diesem Bereich eine Hindurchführung oberhalb des Anlenkpunkts 130 nur schwer möglich wäre, da hier die Windungen 117 der Induktionsheizspule 116 verlaufen.

In der Fig. 3 ist ein weiteres Induktionskochfeld 211 gemäß der Erfindung dargestellt, hier ohne Kochfeldplatte. Eine Bedieneinrichtung 215 ist im vorderen Bereich vorgesehen und definiert so den verbleibenden Flächenbereich des Kochfelds 211 als Heizbereich. Des Weiteren weist das Kochfeld 211 bzw. der genannte Heizbereich sechs Induktionsheizspulen 216a bis 216f auf, die in zwei Reihen hintereinander zu jeweils drei Induktionsheizspulen 216 nebeneinander angeordnet sind. Sämtliche Induktionsheizspulen 216a bis 216f sind bewegbar ausgebildet und insbesondere auch gleich groß bzw. gleich ausgebildet. Hier ist entsprechend der Darstellung der Fig. 2 eine Positioniervorrichtung 221 a mit einem oberhalb der Induktionsheizspule 216a bzw. einer oberen Mikanitplatte 218a angeordneten Tragarm 233a vorgesehen. Die Position eines hier nicht dargestellten Dreharms für die Positioniervorrichtung 221 entspricht im Wesentlichen derjenigen des Tragarms 233. Dieser ist entsprechend Fig. 2 durch die Induktionsheizspule 216a hindurchgeführt. An seinem Ende weist er einen drehbaren Sensorträger 235a auf, auf dem ein Temperatursensor 237a samt Anschlussleitung 238a sitzt. Links an der oberen linken Induktionsheizspule 216a ist als weiterer Teil der Positioniervorrichtung 221 a ein Führungsarm 228a dargestellt. Dieser greift ähnlich wie in Fig. 2 dargestellt mit einem Anlenkpunkt 230a in den äußeren Randbereich der Induktionsheizspule 216a ein. Mit einem Drehpunkt 219a ist er nach unten im Induktionskochfeld 211, beispielsweise in einem Tragblech, drehbar gelagert.

Des Weiteren sind an dem Kochfeld 211 noch vier zusätzliche Temperatursensoren 237' vorgesehen. Diese können auf sonstige Art und Weise positioniert sein, insbesondere mit längeren Anschlusskabeln an der Unterseite einer Kochfeldplatte befestigt sein. Sie sollen unabhängig von einer Bewegung der Induktionsheizspulen 216 stets an derselben Position verbleiben mit gleicher Ausrichtung. Dies dient dem Zweck, dass auch in diesem Bereich eine Temperatur messbar sein sollte, wenn beispielsweise die beiden linken oberen Induktionsheizspulen 216a und 216b eine gemeinsame Kochstelle bilden zum Beheizen eines aufgesetzten großen Kochgefäßes. Da deren beiden Temperatursensoren 237a und 237b dann vom Mittelbereich unter diesem Kochgefäß ein Stück entfernt sind, kann hier keine Temperaturmessung erfolgen, was aber aus Sicherheitsgründen von Vorteil wäre.

Zwei nochmals zusätzliche Temperatursensoren 237" sind an Stellen positioniert, die nicht von den Induktionsheizspulen 216 überstrichen werden können, nämlich da, wo sich je vier benachbarte Induktionsheizspulen 216 maximal nahe kommen. Dies ist aus deren Bewegungsbahnen 226 ersichtlich.

Fig. 4 stellt eine Abwandlung von Fig. 1 dar, in der gezeigt werden soll, wie mögliche Totpunkte bei der Bewegung der Induktionsheizspulen 216 überwunden bzw. vermieden werden können. Hierbei ist auf der linken Seite eines Induktionskochfelds 11' eine andere Ausgestaltung der Dreharme 23' und der Führungsarme 28' dargestellt als auf der rechten Seite, wo die Dreharme 23" und die Führungsarme 28" jeweils verlängert sind.

Links in der Fig. 4 ist sehr vereinfacht eine Möglichkeit dargestellt, das richtige Überwinden des Totpunktes zu gewährleisten. Hierbei werden ein Dreharm 23a' und 23c' und zwei Führungsarme 28a' und 28c' eingesetzt. Durch deren Anordnung, beispielsweise im Dreieck, können immer nur maximal zwei Arme fluchtend angeordnet sein, wobei immer ein dritter Arm parallel dazu angeordnet ist. Hierdurch lässt sich die vorgenannte statische Unbestimmtheit bei der Bewegung der Induktionsheizspulen 216 vermeiden.

Rechts in der Fig. 4 ist eine andere Möglichkeit dargestellt, das richtige Überwinden des Totpunktes zu gewährleisten. Dabei sind jeweils die Dreharme 23b" und 23c" oder die Führungsarme 28b" und 28d" durch ein begrenzt schwenkbar gelagertes Element verlängert, welches als Schnappelement fungiert, hier nur die Führungsarme 28b" und 28d" durch die begrenzt schwenkbar gelagerten Elemente 31b" und 31c". Die begrenzt schwenkbar gelagerten Elemente 31b" und 31 c" können an den Anlenkpunkten 30b" und 30d" gelagert sein. Die Dreharme 23b" und 23c" sind über die Anlenkpunkte 25b" und 25d" hinaus verlängert, vorteilhaft um etwa 60%.

Von der Spitze der schwenkbar gelagerten Elemente 31b" und 31 c" ist jeweils eine Zugfeder 32b" und 32d" zum verlängerten Dreharm 23b" und 23c" gespannt. Bewegt sich nun der Dreharm 23 auf seiner Kreisbahn, so wird das schwenkbar gelagerte Element 31 durch die Zugfeder 32 in Richtung des Dreharms 23 gezogen. Der Abstand zwischen den Anlenkpunkten 25, 30 von Dreharm 23 und Führungsarm 28 ist jedoch durch deren Befestigung an der Induktionsheizspule 16 unveränderlich. Durch die begrenzt schwenkbare Lagerung des schwenkbar gelagerten Elements 31 wird es von der Federkraft immer in einer Position gehalten, die nicht fluchtend zum Führungsarm 28 ist. Erreicht der Führungsarm 28 nun durch die Drehbewegung des Dreharms 23 einen Totpunkt, in dem Dreharm 23 und Führungsarm 28 in einer Flucht liegen würden, so schnappt das schwenkbar gelagerte Element 31 als Schnappelement beim Überschreiten dieses Totpunktes über. Dadurch ändert sich auch die Kraftrichtung der Federkraft leicht. Durch diese bistabile Aufhängung kann der Führungsarm 28 nicht im Totpunkt stehen bleiben, sondern schnappt jeweils in eine Position wenige Grad vor oder nach dem Totpunkt. Durch diese Anordnung ist sichergestellt, dass dich die beiden Arme 23 und 28 in jeweils gleicher Richtung aus dem Totpunkt herausbewegen. Ob das schwenkbar gelagerte Element 31 an Dreharm oder Führungsarm angebracht ist und der andere Arm dann verlängert ist, spielt dabei keine Rolle. Unter Umständen kann auch auf die Verlängerung verzichte werden.

In den Fig. 5 bis 10 sind Beispiele für Anordnungen der Induktionsheizspulen 16a bis 16d des Kochfelds 11 aus Fig. 1 dargestellt, abhängig von der Anzahl, Größe und Position aufgestellter Töpfe bzw. Kochgefäße.

In der Fig. 5 ist dargestellt, wie die vier Induktionsheizspulen 16a bis 16d jeweils maximal weit nach vorne und nach hinten beabstandet sind. Dies kann auch an der Ausrichtung der jeweils erkennbaren Dreharme 23 gesehen werden. Über jeder Induktionsheizspule 16a bis 16d steht ein mittelgroßer Topf 141. Dabei ist zu erkennen, dass die Überdeckung jeweils etwas unterschiedlich ist. Bei den beiden linken Induktionsheizspulen 16a und 16c sind die Töpfe 141 jeweils in Richtung aufeinander zu verschoben und stehen hier über die jeweilige Induktionsheizspule 16 ein Stück über. Mit der gegenüberliegenden Außenkante liegen sie gerade etwa über der hinteren bzw. der vorderen Lateralseite der Induktionsheizspule 16. Ähnlich ist es bei der rechten hinteren Induktionsheizspule 16b. Bei der rechten vorderen Induktionsheizspule 16d sitzt der mittlere Topf 141 einigermaßen mittig darüber, nur etwas nach rechts zur Seite verschoben.

Bei der Fig. 6 ist zu ersehen, dass zwei mittelgroße Töpfe 141 links vorne und links hinten aufgesetzt sind. Rechts hinten ist ein kleiner Topf 140 auf das Kochfeld 11 aufgesetzt, und rechts vorne ein großer Topf 142. Bei der relativ unregelmäßigen Anordnung, die teilweise auch der Größe der Töpfe und somit der zur Verfügung stehenden Fläche des Heizbereichs, vor allem in Richtung nach hinten, geschuldet ist, sind die Induktionsheizspulen 16a bis 16d sozusagen entsprechend der Bewegungsmöglichkeit möglichst gut unter den jeweiligen Topf positioniert bzw. bewegt worden. Dies kann entsprechend dem vorbeschriebenen Verfahren durchgeführt werden, indem die Induktionsheizspulen 16a bis 16d jeweils einen vollen Bewegungsumlauf durchführen entsprechend der Bewegungsbahnen 26a bis 26d. Dies bedeutet, dass, wie aus den nachfolgenden Fig. 7 bis 9 auch noch deutlich wird, zwei Induktionsheizspulen 16 gemeinsam eine aneinanderstoßend gebildete Kochstelle bilden können, die in gewissem Umfang verschiebbar ist.

Aus der Fig. 6 ist auch zu ersehen, dass die Töpfe jeweils einigermaßen zentrisch über den Induktionsheizspulen sitzen bzw. die Induktionsheizspulen 16 einigermaßen zentrisch unter die Töpfe bewegt worden sind.

In der Fig. 7 ist zu ersehen, dass zum Beheizen von zwei großen Töpfen 142 links hinten und rechts vorne jeweils zwei kombinierte Kochzonen gebildet worden sind. Die Aufsetzposition der Töpfe 142 bemisst sich im Wesentlichen am zur Verfügung stehenden Platz im Heizbereich am Kochfeld 11. Um den linken hinteren großen Topf 142 zu beheizen sind die linke hintere Induktionsheizspule 16a und die linke vordere Induktionsheizspule 16c ziemlich nahe aneinander und nach hinten bewegt worden. Um den Überdeckungsunterschied zwischen den beiden Induktionsheizspulen 16a und 16c nicht zu groß werden zu lassen, ist die kombinierte Kochzone möglichst nach hinten bewegt worden, so dass der gemeinsame Flächenschwerpunkt möglichst nahe zum Mittelpunkt des großen Topfes 142 ist.

In ähnlicher Form sind die rechte hintere Induktionsheizspule 16b und die rechte vordere Induktionsheizspule 16d nebeneinander knapp anliegend bewegt worden und maximal weit nach vorne, um auch hier eine möglichst gute bzw. große Überdeckung wie zuvor beschrieben durch den großen Topf 142 zu erreichen. Ein Überdeckungsunterschied ist hier deutlich größer, das ist aber nicht vermeidbar, wenn insgesamt eine möglichst große Überdeckung durch den Topf 142 erreicht werden soll. Die Induktionsheizspulen 16b und 16d sind schon maximal weit nach vorne bewegt worden.

Aus der Fig. 7 ist gerade für große Töpfe gut zu erkennen, dass diese vom Aufsetzen her eher links und rechts als vorne und hinten platziert werden. Dies liegt auch daran, dass der Heizbereich eben breiter ist als tief, wie zuvor bereits erläutert.

In der Fig. 8 sind wiederum eine linke und eine rechte zusammenhängende Kochzone gebildet worden aus den Induktionsheizspulen 16a/16c und 16b/16d, um zwei lange Bräter 143 zu beheizen. Dies ähnelt zwar grundsätzlich der Fig. 7. Allerdings sind die beiden Bräter 143 möglichst weit voneinander weg aufgestellt worden, so dass auch die Paare von Induktionsheizspulen 16a/c und 16b/d möglichst nahe zum seitlichen Außenrand des Heizbereichs verschoben worden sind.

Aus der Fig. 10, die nachfolgend noch beschrieben wird, ist zwar leicht vorstellbar, dass die Bräter auch in Richtung von links nach rechts aufgestellt werden könnten. Dann ist aber der hintere Bräter nur schwer erreichbar. Da hier die Bräter in Richtung von vorne nach hinten relativ mittig auf den Heizbereich des Kochfelds 11 aufgestellt worden sind, allerdings mit deutlichem Abstand zueinander, sind die Paare von Induktionsheizspulen 16a/16c und 16b/16d wiederum so darunter positioniert worden, dass sie bzw. ihr gemeinsamer Flächenschwerpunkt möglichst unter einem Mittelpunkt der Bräter 143 liegt. Im Vergleich zur Fig. 7 ist also das linke Paar von Induktionsheizspulen 16a/16c weiter nach vorne und etwas weiter nach links bewegt worden. Das rechte Paar von Induktionsheizspulen 16b/16d ist weiter nach rechts und weiter nach hinten bewegt worden.

In der Fig. 9 ist dargestellt, wie auf einem Kochfeld 11 auch ein sehr großer Topf 144 beheizt werden kann, und zwar durch alle vier Induktionsheizspulen 16a bis 16d gemeinsam. Dazu sind diese, wie aus ihrer Position relativ zum Kochfeld 11 sowie aus der Stellung der Positioniervorrichtungen bzw. der Dreharme und Führungsarme erkannt werden kann, zu einer möglichst engen kompakten Fläche zusammengefahren. Dies bedeutet, dass die vorderen und hinteren Paare von Induktionsheizspulen 16a/16c und 16b/16d, anders als in den Fig. 7 und 8, auch möglichst nahe zueinander bewegt sind. So haben alle Induktionsheizspulen 16 ungefähr den gleichen Grad an Überdeckung durch den sehr großen Topf 144. Wäre nun, ähnlich wie in der Fig. 3 dargestellt, noch ein zusätzlicher Temperatursensor vorhanden, was empfehlenswert wäre, so wäre er in dem Mittelbereich zwischen linken und rechten Induktionsheizspulen 16/16c und 16b/16d angeordnet bzw. es wären zwei solcher Temperatursensoren dort vorhanden. Dann wäre einer weiter vorne und einer weiter hinten angeordnet.

In der Fig. 10 ist noch dargestellt, wie ein Bräter 143 hinten quer auf das Kochfeld 11 aufgestellt ist. Zu seiner Beheizung sind die beiden hinteren Induktionsheizspulen 16a und 16b zusammengefahren, aber nicht möglichst weit zusammengefahren, sondern gleichzeitig auch noch etwas nach hinten. So wird wiederum für beide eine maximale Überdeckung durch den Bräter 143 erreicht.

Im vorderen Heizbereich sind ein mittlerer Topf 141 und ein kleiner Topf 140 aufgestellt. Unter diese sind, vorteilhaft nach Durchführung des vorherigen Verfahrens zur Ermittlung der optimalen Position, die Induktionsheizspulen 16c und 16d bewegt worden.

Wird nun bei einer der in den Fig. 5 bis 10 dargestellten Konfigurationen einer der Töpfe bewegt, so versucht die zugehörige einzelne Induktionsheizspule oder die mehreren zugehörigen Induktionsheizspulen durch Durchlaufen eines gewissen Anteils der Bewegungsbahn, vorzugsweise einer vollständigen Bewegungsbahn, wieder die optimale Position unter diesem Kochgeschirr zu finden, bei dem sie durch das Kochgeschirr maximal überdeckt ist bzw. sind. Das Durchlaufen einer vollständigen Bewegungsbahn weist den großen Vorteil auf, dass erst dann mit Sicherheit die optimale Position dieser maximalen Überdeckung gefunden werden kann.

Sollte ein Kochgeschirr so weit weg von einer der Induktionsheizspulen bewegt worden sein, dass sich keine ausreichend absolute Überdeckung mehr ergibt, beispielsweise nur noch zu weniger als 50% oder sogar weniger als 30%, so ist klar, dass diese Induktionsheizspule dieses Kochgeschirr gar nicht mehr beheizen kann. Dann wird diejenige Induktionsheizspule entsprechend bewegt, in deren Richtung das Vorhandensein des Kochgeschirrs von der ersten Induktionsheizspule überhaupt noch erkannt werden kann. Andernfalls muss eine eingangs genannte Sensorik verwendet werden, um herauszufinden, welche Induktionsheizspule am besten in eine Position unterhalb dieses Kochgeschirrs bewegt werden kann. Alternativ können die Induktionsheizspulen selbst diese Sensorik bilden. Dann werden eben mehrere Induktionsheizspulen, die noch nicht in einem ausreichend Maß von beispielsweise mindestens 30% oder mindestens 50% von einem Kochgeschirr überdeckt sind, entlang ihrer Bewegungsbahn bewegt, um zu sehen, ob sie dabei eine entsprechende Überdeckung durch das verschobene Kochgeschirr erreichen können. In diesem Fall werden sie dann betrieben um dieses Kochgeschirr zu beheizen. Dabei kann eine zuvor eingestellte Leistungsstufe oder eine eingestellte Flächenleistungsdichte für das Kochgeschirr beibehalten werden und die neue Induktionsheizspule dann entsprechend betrieben werden.

## Patentansprüche

1. Kochfeld mit:
- einer Kochfeldplatte mit einem Heizbereich,
- mindestens einer Heizeinrichtung unter der Kochfeldplatte, wobei die Heizeinrichtung in dem Heizbereich bewegbar angeordnet ist,
- einer Positioniervorrichtung zur Bewegung und Positionierung der Heizeinrichtung unter der Kochfeldplatte,
**gekennzeichnet durch**
- die Positioniervorrichtung ist für genau diese Heizeinrichtung vorgesehen und mit dieser verbunden,
- die Positioniervorrichtung ist zu einer Bewegung der Heizeinrichtung entlang einer geschlossenen Bahn ausgebildet mit einer Führung der Heizeinrichtung derart, dass die Heizeinrichtung ihre Orientierung bzw. ihre Drehposition relativ zu dem Kochfeld beibehält.

2. Kochfeld nach Anspruch 1, **dadurch gekennzeichnet, dass** die geschlossene Bahn eine runde Bahn ist, insbesondere eine Kreisbahn bzw. elliptische Bahn.

3. Kochfeld nach Anspruch 1 oder 2, **dadurch gekennzeichnet, dass** mehrere Heizeinrichtungen unter der Kochfeldplatte angeordnet sind, wobei insbesondere mindestens zwei Heizeinrichtungen nebeneinander und mindestens zwei Heizeinrichtungen hintereinander vorgesehen sind, wobei vorzugsweise vier oder sechs Heizeinrichtungen vorgesehen sind, insbesondere in einer vorderen Reihe und einer hinteren Reihe.

4. Kochfeld nach einem der vorhergehenden Ansprüche, **dadurch gekennzeichnet, dass** mindestens eine Heizeinrichtung, vorzugsweise jede Heizeinrichtung, Sensormittel zur Bestimmung ihres Überdeckungsgrades durch ein Kochgefäß aufweist und/oder mindestens einer Heizeinrichtung, vorzugsweise jeder Heizeinrichtung, Sensormittel zur Bestimmung ihres Überdeckungsgrades durch ein Kochgefäß zugeordnet sind.

5. Kochfeld nach einem der vorhergehenden Ansprüche, **dadurch gekennzeichnet, dass** die Positioniervorrichtung eine rotierende Drehwelle samt Antrieb aufweist mit einem Dreharm, wobei der Dreharm an einem Ende mit der Drehwelle verbunden ist und an einem anderen Ende mit der Heizeinrichtung, wobei vorzugsweise die Positioniervorrichtung mindestens einen Führungsarm aufweist, der parallel zu dem Dreharm verläuft und an einem freien Ende ortsfest im Kochfeld drehbar angeordnet ist und an einem anderen freien Ende mit der Heizeinrichtung verbunden ist, wobei der Dreharm und der mindestens eine Führungsarm eine Parallelführung für eine Bewegung der Heizeinrichtung unter Beibehaltung ihrer Orientierung bilden.

6. Kochfeld nach Anspruch 5, **dadurch gekennzeichnet, dass** genau eine rotierende Drehwelle mit genau einem Dreharm und genau ein Führungsarm pro Heizeinrichtung vorgesehen sind, wobei ein zusätzliches Schnappelement zur Überwindung eines Totpunkts bei der Bewegung der Heizeinrichtung vorgesehen ist, wobei das Schnappelement begrenzt drehbar gelagert ist an einem Ende des Dreharms oder des Führungsarms und mit einem Federelement mit dem Ende des anderen Arms verbunden ist.

7. Kochfeld nach Anspruch 5, **dadurch gekennzeichnet, dass** genau eine rotierende Drehwelle mit genau einem Dreharm und zwei Führungsarme pro Heizeinrichtung vorgesehen sind, wobei die drei Arme derart angeordnet sind, dass sie nicht in einer Flucht liegen können.

8. Kochfeld nach einem der vorhergehenden Ansprüche, **dadurch gekennzeichnet, dass** die Positioniervorrichtung genau eine rotierende Drehwelle samt Antrieb aufweist mit einem ersten Dreharm, wobei der erste Dreharm an einem Ende mit der Drehwelle verbunden ist und an einem anderen Ende mit der Heizeinrichtung, wobei eine zweite rotierende Drehwelle vorgesehen ist, die mit dem Antrieb der ersten Drehwelle durch geeignete Synchronisationsmittel synchronisiert ist, wobei der zweiten Dreharm ebenfalls mit der Heizeinrichtung verbunden ist.

9. Kochfeld nach einem der Ansprüche 5 bis 8, **dadurch gekennzeichnet, dass** die Drehwelle unterhalb der Heizeinrichtung angeordnet ist und auch der Dreharm unterhalb der Heizeinrichtung angeordnet ist, wobei vorzugsweise im Bereich der Verbindung des freien Endes des Dreharms mit der Heizeinrichtung eine Wellendurchführung durch die Heizeinrichtung von einer Unterseite auf eine Oberseite vorgesehen ist, wobei oberhalb der Oberseite von der Wellendurchführung ein Tragarm abgeht parallel zum Dreharm und an seinem freien Ende in Verlängerung der Drehwelle einen Temperatursensor trägt, wobei der Temperatursensor drehbar gegenüber dem Tragarm angeordnet ist.

10. Kochfeld nach Anspruch 9, **dadurch gekennzeichnet, dass** der Temperatursensor elektrische Anschlüsse aufweist, die vorzugsweise parallel zueinander in die gleiche Richtung parallel zur Oberseite der Heizeinrichtung abgehen, wobei die elektrischen Anschlüsse ihre Orientierung relativ zu dem Kochfeld beibehalten bei Bewegung der Heizeinrichtung und wobei vorzugsweise der Temperatursensor dabei seine Position behält, wobei vorzugsweise die elektrischen Anschlüsse gleichzeitig federnde Eigenschaften aufweisen und zum Andrücken des Sensors an die Kochfeldplatte ausgebildet sind.

11. Kochfeld nach einem der vorhergehenden Ansprüche, **dadurch gekennzeichnet, dass** die Heizeinrichtung eine Anschlusseinrichtung aufweist, vorzugsweise als Leistungsanschlüsse, wobei bei Bewegung der Heizeinrichtung diese Leistungsanschlüsse stets an derselben Winkelposition relativ zu einem Mittelpunkt der Heizeinrichtung sind bzw. ihre Orientierung relativ zu dem Kochfeld beibehalten.

12. Kochfeld nach einem der vorhergehenden Ansprüche, **dadurch gekennzeichnet, dass** sich die Drehbereiche bzw. Bewegungsbereiche von seitlich nebeneinander angeordneten Heizeinrichtungen überlappen und die Bewegungsbereiche von hintereinander angeordneten Heizeinrichtungen überlappen, wobei die Überlappung von hintereinander angeordneten Heizeinrichtungen größer ist, insbesondere zwei Mal bis zehn Mal so groß, als die Überlappung von seitlich nebeneinander angeordneten Heizeinrichtungen.

13. Kochfeld nach einem der vorhergehenden Ansprüche, **dadurch gekennzeichnet, dass** die Heizeinrichtung eine Induktionsheizspule ist und das Kochfeld ein Induktionskochfeld, wobei vorzugsweise das Induktionskochfeld vier Induktionsheizspulen als Heizeinrichtungen aufweist mit Anordnung im Rechteck, wobei insbesondere die Induktionsheizspulen rechteckige Form aufweisen, vorzugsweise mit einer Differenz zwischen langen Lateralseiten und kurzen Lateralseiten von maximal 25%, insbesondere maximal 20%.

14. Verfahren zur Positionierung einer Heizeinrichtung an einem Kochfeld nach einem der vorhergehenden Ansprüche, **dadurch gekennzeichnet, dass**, wenn ein über einer Heizeinrichtung auf eine Kochfeldplatte des Kochfelds aufgestelltes Kochgefäß in seitlicher Richtung bewegt wird oder ein Kochgefäß aufgestellt wird und dabei dezentral zu der Heizeinrichtung steht, die Heizeinrichtung zumindest teilweise entlang einer geschlossenen Bahn bewegt wird, insbesondere eine vollständige geschlossene Bahn durchlaufen wird, um in eine optimale Position zu dem Kochgefäß gebracht zu werden derart, dass die Heizeinrichtung in einem ersten Fall, dass sie die einzige Heizeinrichtung für dieses Kochgefäß ist, mit ihrem Mittelpunkt in etwa unter dem Mittelpunkt des Kochgefäßes liegt, und in einem zweiten Fall, dass sie zusammen mit mindestens einer weiteren Heizeinrichtung dieses Kochgefäß beheizt, die Heizeinrichtungen durch jeweilige Bewegung bzw. Positionierung mit möglichst gleicher Überdeckung durch das Kochgefäß angeordnet werden, insbesondere nebeneinander.

15. Verfahren nach Anspruch 14, **dadurch gekennzeichnet, dass** bei einer induktiven Heizeinrichtung die optimale Position diejenige Position ist, bei der ein Maximum der elektromagnetischen Kopplung zwischen der Heizeinrichtung und dem Kochgefäß vorliegt, wobei vorzugsweise bei mehreren induktiven Heizeinrichtungen die jeweils optimale Position diejenige Position ist, bei der ein Maximum der Summe der elektromagnetischen Kopplung zwischen den einzelnen Heizeinrichtungen und dem Kochgefäß vorliegt.
